# EUROPEAN PATENT SPECIFICATION

(11) **EP 1 105 356 B1**
(45) Date of publication and mention of the grant of the patent: **02.04.2003**
(21) Application number: 99936821.0
(22) Date of filing: 29.07.1999
(51) Int. Cl.: C03C 17/245, C03C 17/34

(54) **PROCESS FOR COATING GLASS**
VERFAHREN ZUR BESCHICHTUNG VON GLAS
PROCEDE DE REVETEMENT SUR VERRE

(30) Priority: 01.08.1998 GB 9816720
(43) Date of publication of application: 13.06.2001
(73) Proprietor: PILKINGTON PLC, St. Helens, Merseyside WA10 3TT (GB)
(72) Inventor: SANDERSON, Kevin David, Lancashire L39 2HD (GB)
(74) Representative: Halliwell, Anthony Charles
(86) International application number: GB9902501
(87) International publication number: WO00007954

(56) References cited:
- EP-A- 0 546 669
- DAI, GUORUI ET AL: "A study of tungsten oxide thin films prepared by plasma enhanced CVD (PECVD)" ADV. SCI. TECHNOL. (1995), 5(ADVANCES IN INORGANIC FILMS AND COATINGS), 407-414 , XP002123373
- CHEMICAL ABSTRACTS, vol. 126, no. 15, 14 April 1997 (1997-04-14) Columbus, Ohio, US; abstract no. 205647, HUI, BORAN ET AL: "Tungsten oxide thin films prepared by using tungsten oxychloride as a precursor" XP002123375 & JILIN DAXUE ZIRAN KEXUE XUEBAO (1996), (3), 49-52 ,
- DAVAZOGLOU D ET AL: "STRUCTURE AND OPTICAL PROPERTIES OF WO3 THIN FILMS PREPARED BY CHEMICAL VAPOUR DEPOSITION" THIN SOLID FILMS MAR 2 1987, vol. 147, no. 2, 2 March 1987 (1987-03-02), pages 131-142, XP002123374
- ENNAOUI A ET AL: "Preparation of textured and photoactive 2H-WS2 thin films by sulfurization of WO3" THIN SOLID FILMS, vol. 261, no. 1/2, 1 June 1995 (1995-06-01), page 124-131 XP004003740 ISSN: 0040-6090
- ROTHSCHILD M ET AL: "EXCIMER-LASER-INDUCED SUB-0.5UM PATTERNING OF WO3 THIN FILMS" APPLIED PHYSICS LETTERS, vol. 59, no. 14, 30 September 1991 (1991-09-30), pages 1790-1792, XP000250019 ISSN: 0003-6951
- CHEMICAL ABSTRACTS, vol. 116, no. 2, 13 January 1992 (1992-01-13) Columbus, Ohio, US; abstract no. 13556, JUDEINSTEIN, PATRICK ET AL: "Sol-Gel synthesis of tungsten trioxide thin films" XP002123376 & J. MATER. CHEM. (1991), 1(4), 621-7 ,

## Description

This invention relates to a process for coating glass and a coated glass, in particular it relates to a process for depositing a tungsten oxide layer on to glass.

There is a demand for solar control glass, that is glass which transmits a high percentage of incident light and a relatively low percentage of total incident radiation energy (total solar heat). One way of producing such a glass is by depositing on to glass a coating comprising a layer or layers of various materials, in particular metal oxides, the layers usually having thicknesses in the submicrometer range. A convenient deposition method for metal oxide coatings on glass is on-line chemical vapour deposition which comprises directing a gaseous stream of a metal containing compound and an oxygen containing gas (often water) on to a hot glass ribbon as the ribbon is produced, the components of the gaseous stream react together at the hot glass surface and deposit a metal oxide layer.

A metal oxide useful in glass coatings, including solar control coatings, is tungsten oxide, known in stoichiometric, non-stoichiometric and doped forms. EP 0 546 669 B1 describes a method for the deposition of fluorine doped tungsten oxide on to the surface of a glass sheet by chemical vapour deposition during the float glass production process. The method comprises reacting tungsten hexafluoride with an oxygen containing compound and a fluorine containing tungsten compound adjacent the surface of a hot glass ribbon at a temperature of 350°C to 450°C and for a time sufficient to produce a layer of WO_{3-X} F_{X} (x is said to be from greater than zero to less than one). Unfortunately, EP 0 546 669 B1 does not provide a simple general process for depositing tungsten oxide (i.e. an adaptable process that can be used to deposit tungsten oxide, including stoichiometric and non-stoichiometric tungsten oxide as well as doped tungsten oxide).

High coating growth rate is desirable for a coating process. To achieve this in chemical vapour deposition of tungsten oxide layers, it is desirable that the tungsten compounds (and other components of the gas stream) have a relatively high volatility (which helps in achieving good carryover of the tungsten compound to the glass surface), and good thermal stability (to alleviate thermal decomposition before reaching the glass surface).

We have discovered, in accordance with the present invention, a simple chemical vapour deposition process for the deposition of tungsten oxide layers in stoichiometric, non-stoichiometric or doped forms that can be conveniently used to deposit tungsten oxide on-line during the glass production process at high coating growth rates.

According to an aspect of the present invention there is provided a process for depositing a coating comprising tungsten oxide on the surface of a glass substrate by directing a gaseous stream comprising tungsten oxyhalide or tungsten chloride and a source of oxygen on to the surface of the glass substrate characterised in that the glass substrate is at a temperature in the range 500°C to 720°C.

Preferably, the coating comprising tungsten oxide comprises a layer of tungsten oxide.

Preferably the tungsten oxyhalide is tungsten oxychloride, more preferably tungsten oxytetrachloride (WOCl₄). Alternatively, tungsten oxyhalide may comprise tungsten dioxydichloride (WO₂Cl₂) which is the product of reaction between WOCl₄ and water (and is often present as an impurity in WOCl₄). The volatility and thermal stability of tungsten oxytetrachloride are such as to provide good carryover to the glass surface without significant thermal degradation.

Usually tungsten chloride will be tungsten (V) chloride (WCl₅) or tungsten (VI) chloride (WCl₆).

The tungsten oxyhalide or tungsten chloride may be a substituted tungsten oxyhalide or tungsten chloride. Generally any substituted tungsten oxyhalide or tungsten chloride or mixture of tungsten oxyhalides or tungsten chlorides and/or substituted tungsten oxyhalides or tungsten chlorides may be used in the invention including *for* example WX₆₋ₙ (OR)ₙ, WOX₄₋ₙ(OR)ₙ, (where X = Cl, Br, I or F and R is an organic group and n is an integer preferably having a value in the range 1-3), or tungsten oxyhalide substituted with multidentate ligands.

Preferably the source of oxygen is an ester, especially an ester with 4 to 10 carbon atoms, more preferably an ester with 3 or 4 to 6 carbon atoms, most preferably ethyl acetate or butyl acetate. The use of esters as sources of oxygen appears to have the effect of increasing the deposition rate of tungsten oxide with incorporation of oxygen from the ester into the coating. It is thought that this is because the ester decomposes at elevated temperature first to a carboxylic acid and then to water. The decomposition temperature of 3 to 6 carbon atom esters appears to be such that most of the decomposition occurs in or near the surface of the substrate, rather than in the delivery lines, with the result that the reaction of water and tungsten precursors occurs more at the glass surface, enhancing deposition rate and reducing pre-reaction and blocking of the delivery lines. Blocking of the delivery lines may especially occur if free water is present in the delivery lines including water present as a result of too early a decomposition of an ester.

The gaseous stream may contain oxygen gas, which has the advantage of producing tungsten oxide coatings with significantly lower haze.

The ratio of tungsten oxyhalide or tungsten chloride and the source of oxygen are desirably such that the layer of tungsten oxide is deposited as non-stoichiometric tungsten oxide (i.e. a ratio having less than the stoichiometric amount of oxygen, producing an oxygen deficient tungsten oxide). Non-stoichiometric tungsten oxide (represented as WO₃₋ₓ where x is greater than zero but usually less than 0.5), tends to absorb infra red radiation with little absorption of visible light when x is of a suitable value which may be, for example, up to about 0.03. Non-stoichiometric tungsten oxide is particularly useful as a layer coating intended for solar control applications.

The gaseous stream may contain a source or sources of fluorine which is advantageous if it is desired to produce fluorine doped tungsten oxide. Preferably the source of fluorine is hexafluoropropylene oxide or trifluoroacetic acid, more preferably hexafluoroethane. Hexafluoroethane is especially preferred because its use provides substantially haze free fluorine doped tungsten oxide coatings.

In a preferred aspect of the invention tungsten oxyhalide or tungsten chloride is entrained in a gaseous stream by flowing gas over hot tungsten oxyhalide or tungsten chloride, preferably whilst tungsten oxyhalide or tungsten chloride is at a temperature in the range 170°C to 210°C. In this range of temperatures tungsten oxytetrachloride does not have a defined liquid region, but surprisingly, despite being substantially solid, tungsten oxytetrachloride is entrained in the flowing inert gas sufficiently well to provide good carryover to the surface of the glass substrate. At temperatures lower than 170°C carryover is low which can result in low growth rate, above 210°C decomposition of the precursor may result, especially during prolonged heating. The flowing gas preferably comprises nitrogen.

The process of the present invention is normally used to deposit tungsten oxide coatings having thicknesses in the range 70 to 180 nm and commonly enables growth rates of tungsten oxide in the range 3 to 25 nm s⁻¹ to be achieved.

The tungsten oxide layer may be overcoated with a further layer, the further layer may be a metal oxide layer, preferably fluorine doped tin oxide. This aspect provides protection of the tungsten oxide layer from degradation (for example, from oxidation or weathering) and if the further layer is fluorine doped tin oxide has the additional advantage of providing a solar control coating, with low emissivity (high infra red reflection), and is applicable whether the tungsten oxide layer is formed from a tungsten oxyhalide or a tungsten chloride or otherwise.

Thus, according to a further aspect of the invention, there is provided a process for coating glass which comprises directing a gaseous stream containing a tungsten compound and a source of oxygen on to the surface of a glass substrate thereby forming a tungsten oxide layer characterised in that the tungsten oxide layer is non-stoichiometric and the tungsten oxide layer is overcoated with a further layer. Generally, in this aspect of the invention, any suitable tungsten compound and source of oxygen may be used to form a tungsten oxide layer which is non-stoichiometric and which is overcoated by a further layer. The tungsten compound and source of oxygen need not be separate compounds (i.e. a tungsten oxygenate may be used).

Each aspect of the present invention may be performed during the float glass production process, which is advantageous because coated glass according to the invention may then be continuously produced.

Each aspect will normally be performed where the glass substrate is at a temperature in the range 500°C to 720°C, which is practical with the preferred tungsten precursors of the invention (tungsten oxyhalide or tungsten chloride) and this temperature range facilitates achieving a high deposition rate and a durable coating. The most usual temperature range is 565°C to 655°C.

The glass substrate will normally be soda lime silica glass because this is commonly produced during the float glass production process. Unfortunately, when soda-lime-silica glass is used as a substrate, there is a tendency for alkali metal ions from the glass to migrate into the coating; this has two potential deleterious effects. First, the introduction of sodium ions into the coating is liable to modify the electronic characteristics of the tungsten oxide affecting its optical properties. Second, when a halogen-containing, especially a chlorine-containing, precursor has been used to deposit the tungsten oxide, sodium ions may react with halogen residues incorporated in the coating forming sodium halide crystals resulting in the coating having a hazy appearance. Such sodium migration may be combated by depositing an alkali-blocking interlayer on the glass for example of silica, or a silicon oxycarbide. Moreover, by appropriate selection and control of the underlayer thickness and refractive index (see for example, UK patents 2 031 756B and 2 199 848B) a colour suppression effect may be achieved i.e. the appearance of iridescence effects resulting from a thin film of tungsten oxide may be alleviated or avoided.

The process of the present invention may be used to deposit a mixed metal oxide comprising tungsten oxide and one or more other metal oxides, for example by adding the precursor of another metal oxide to the gaseous stream.

Coated glass produced according to the invention may be used in many areas of glass use, including as a glazing pane in multiple glazing units.

In order that the invention may be better understood, reference will now be made to the drawings in which:
Figure 1 illustrates schematically an example of a static chemical vapour deposition reactor and gas delivery system useful for preparing coated glass according to the invention and as used in Examples 1-3.
Figure 2 illustrates schematically a vertical section through a vapourizer used to entrain precursors in carrier gas where the precursors are solid or substantially solid, and as used in Examples 4-6.

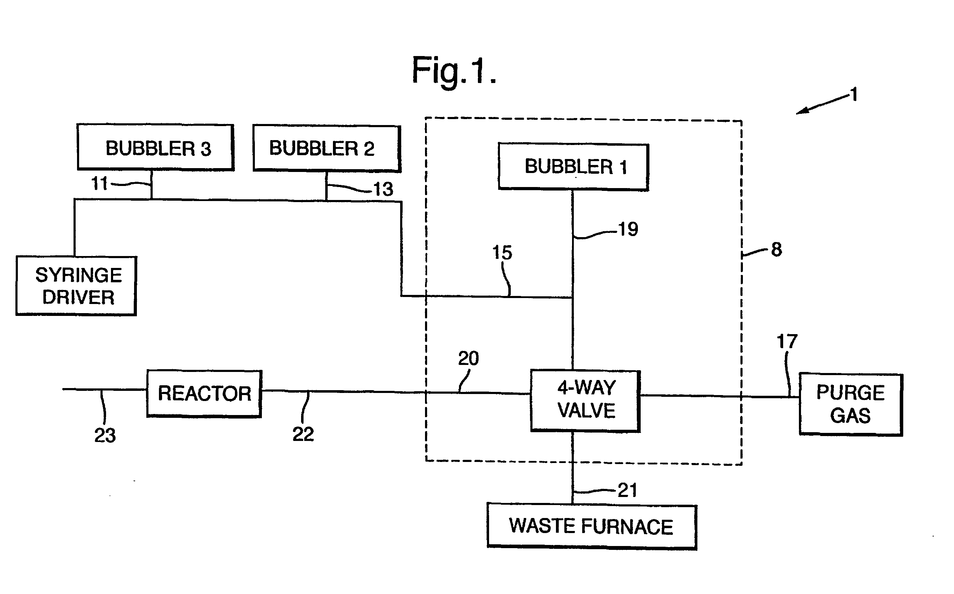

Referring to Figure 1, a static chemical vapour deposition reactor and gas delivery system, generally designated 1, comprises a reactor having an outlet line 23 and an inlet line 22 both of which may be wound and heated with heating tape to reduce the likelihood of condensation. The line 22 continues 20 into the oven 8 and connects to a four-way valve. The oven 8 has an even temperature profile throughout to reduce hot spots/thermal decomposition and reduce cold spots/condensation. The other connections to the four-way valve are the line 17 to a purge gas source, a line 21 to a waste furnace, and a line 19 to a tungsten precursor bubbler (bubbler 1). Leading off from the line 19 a line 15 is partly in the oven but exits and is connected to additive bubbler 2 and bubbler 3 by lines 13 and 11 respectively. A motorized and heated syringe driver enables the introduction and vapourization of precursor/additive solutions.

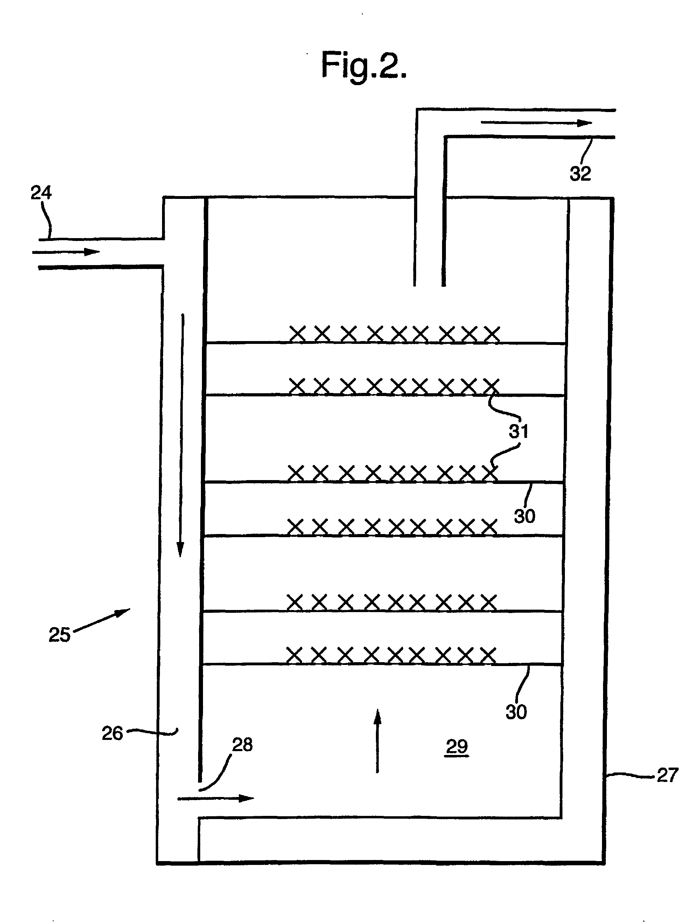

Referring to Figure 2, a vapourizer 25 for use with volatile solid precursor comprises an inlet 24 for carrier gas connecting to the vapourizer vessel 27 via a channel 26 leading to a chamber inlet 28 at the base of the vapourizer vessel 27. The chamber 28 inlet allows the carrier gas to enter the interior 29 of the vapourizer chamber 27. Inside the vapourizer chamber are positioned plural meshed shelves 30, with a mesh size small enough to prevent solid precursor particles or powder 31 from falling through, and hence keeping the interior of the chamber 29 near the chamber inlet 28 free of precursors that could sinter and reduce or prevent gas flow into the vapourizer. Above the shelves is a carrier gas outlet 32 for connection to gas delivery lines and thence reactors (not shown). In use, the vapourizer would be heated.

The invention is illustrated by the following Examples.

### Examples 1-3

In this series of Examples a tungsten oxide coating was deposited on to the face of a float glass substrate carrying a colour suppressing/alkali blocking silicon oxide layer containing carbon (produced as described in European patent EP 0 275 662B) using a laboratory static chemical vapour deposition reactor and gas delivery system as illustrated in Figure 1 and described above. In the reactor, the glass substrate was supported on a cartridge heated graphite block and heated to provide a glass temperature of 625°C. The tungsten precursor was tungsten oxytetrachloride (WOCl₄) which is an orange solid with a melting point of approximately 211°C, and is air sensitive undergoing a reaction with moisture to form tungsten dioxydichloride (WO₂Cl₂) a yellow solid with lower volatility usually present as an impurity in WOCl₄.

A nitrogen carrier gas feed was passed through a bubbler (corresponding to bubbler 2 in Figure 1) maintained at a temperature of 30°C at a flow rate of I litre/min, the bubbler containing either ethyl or butyl acetate. A separate nitrogen carrier gas feed was passed over solid WOCl₄ in a standard bubbler (bubbler 1), the bubbler situated in an oven 8 to maintain the precursor in a temperature range 170 - 185°C. Thermal decomposition of WOCl₄ is low and good precursor transport and growth was still achieved after 20 hours in this temperature range. The separate carrier gas feeds, one with entrained ester and the other with entrained WOCl₄, were combined to form a precursor gas mixture. A nitrogen make-up of 5.5 litres/min and oxygen gas were added to dilute the precursor gas mixture and the diluted precursor gas mixture was delivered through a line (20) to the reactor, the line maintained at a temperature of 200°C. The diluted precursor gas mixture was directed on to the heated glass substrate in the reactor resulting in the deposition of a tungsten oxide coating. The deposition process was continued for a run time of 10 or 30 seconds. At the end of the deposition process, the coated glass was allowed to cool to room temperature under nitrogen. The thickness of the tungsten oxide coating was measured by standard optical (optical constants were obtained from the spectra and the spectra modelled to determine the larger thicknesses) and/or stylus methods. Similar methods were used to measure all layer thicknesses in the Examples.

Table 1 shows the ester used in each Example together with the flow rate of oxygen added to the precursor gas mixture, the run time of the coating process, the thickness of tungsten oxide deposited and the peak growth rate (growth rate of the thickest part of the layer) of the tungsten oxide coating. It was observed that for constant ethyl acetate concentration, growth rate dropped with increasing oxygen concentration.

Bubbler 1 was fitted with a 100 pound per square inch (0.69 MPa) pressure relief valve to minimise risk from over-pressurisation, which could occur, for example, if there were any blockage of the bubbler or delivery lines. Particular care was taken to exclude moisture from the delivery lines and WOCl₄ bubbler because the precursor appears to have an increased sensitivity to moisture at elevated temperature.

The coating process appeared to be affected significantly by substrate temperature. During preparation and performance of these Examples the best deposition temperature range appeared to be 565 - 655°C.

**TABLE I**

| Example | Source of Oxygen | Run Time (sec) | Oxygen Flow (L/min) | Tungsten Oxide Layer Thickness (nm) | Peak Growth Rate (nm sec⁻¹) |
|---|---|---|---|---|---|
| 1 | Ethyl acetate | 10 | 1 | 102 | 10 |
| 2 | Ethyl acetate | 10 | 0.2 | 180 | 18 |
| 3 | n Butyl acetate | 30 | 0.25 | <80 | 2.7 |

### Examples 4-6

In this series of Examples coatings were applied by laminar flow chemical vapour deposition in the bath on to a moving ribbon of float glass during the glass production process using laminar flow coating apparatus generally as described and illustrated in UK patent GB 1 507 996B but with features allowing the mixing of two gas streams at the coater head and dual flow coating. The glass ribbon was coated across a width of approximately 10 cm.

Before deposition of the tungsten oxide coating a silicon oxide undercoat was deposited on the glass using a water cooled graphite head coater, using a process in accordance with European patent EP 0 275 662B. The components and gas flow for the undercoat deposition were as follows: silane (0.06 litres/min), ethylene (0.36 litres/min), oxygen gas (0.16 litres/min) and nitrogen carrier gas (8 litres/min).

The tungsten oxide coating was applied by mixing two gas streams at the coater head, one stream containing tungsten oxytetrachloride (WOCl₄) as tungsten precursor and nitrogen carrier gas and the second stream containing ethyl acetate, oxygen gas and nitrogen carrier gas, and in Example 6, a source of fluorine.

In Example 4 the line speed of the float glass ribbon was 254 metres/hour and the temperature of the glass ribbon on exit from the float bath was 604°C. Nitrogen carrier gas (1 litre/min) was passed through a vapourizer containing WOCl₄ held at a temperature of 175°C. The vaporizer design (enabling high carryover of precursor) was as illustrated in Figure 2 and described above. Entrained tungsten oxychloride was delivered to a dual flow oil-cooled coater head held at a temperature of 210°C. The gas mixture contacted and flowed parallel to the glass surface both upstream and downstream along the glass ribbon. The path of travel both upstream and downstream was about 15 cm. At the coater head the WOCl₄ gas mixture was mixed with a gas mixture containing ethyl acetate (as oxygen source) entrained by passing nitrogen (flow rate 1.2 litres/min) through a bubbler containing ethyl acetate held at a temperature of 42°C, and oxygen gas (flow rate 0.2 litres/min). The WOCl₄ gas stream was diluted by a flow make-up of 4 litres/min and the ethyl acetate gas stream by a flow make-up of 3 litres/min. The growth rate of the tungsten oxide coating was approximately 25 nm/second, yielding a tungsten oxide layer thickness of approximately 110 nm. The thickness of the silicon oxide underlayer was approximately 45 nm. It was noticed that as the strip of tungsten oxide coated glass in Example 4 passed down the float glass production line, the blue colour of the coated glass (thought to indicate a non-stoichiometric tungsten oxide coating) gradually lessened. It is thought that this is due to oxidation or other change in stoichiometry of the tungsten oxide coating in an oxidising atmosphere at elevated temperature because this effect was not seen in Examples 1-3 which were cooled under nitrogen. To alleviate the degradation of the tungsten oxide coating, an overcoat of fluorine doped tin oxide was applied in Examples 5 and 6.

The conditions for deposition of the tungsten oxide coatings of Examples 5 and 6 were similar to Example 4 and described in Table 2. In Example 6 a fluorine dopant (hexafluoroethane) was added to the second gas mixture in order to produce fluorine doped tungsten oxide. Other fluorine dopants (trifluoroacetic acid and hexafluoropropylene oxide) had been briefly added to the coating gases, but increased the haze of the coated glass under the conditions used for deposition.

The fluorine doped tin oxide layer overcoating the tungsten oxide layer in Examples 5 and 6 was deposited just after deposition of the tungsten oxide layer in the float bath. The tin precursor used was dimethyl tin (IV) dichloride ((CH₃)₂ SnCl₂) entrained in the carrier gas (flow rate 0.6 litres/min) by passing nitrogen through a bubbler held at 150°C and delivered to the coater head through a delivery line held at 180°C. Other lines delivered water vapour entrained in nitrogen carrier gas (flow rate 0.6 litres/min, bubbler temperature 50°C) to the coater head where the gas streams were mixed. The total nitrogen carrier gas flow make-up was 5 litres/min, and 0.6 litres/min of oxygen gas was added to the gas mixture. The thickness of the deposited fluorine doped tin oxide layer is shown in Table 3. The sheet resistance of the fluorine doped tin oxide layer was about 80-120 Ω per square (measured by standard methods).

The coated glasses were optically analysed and values of total solar heat transmission (TSHT) and visible transmission were derived using standard procedures. The coated glasses had haze in the range 1% to 2%, total solar heat transmission 53% (Example 5) and 56% (Example 6) visible transmission 63% (Examples 5 and 6).

**TABLE 2**

| | EXAMPLE 5 | EXAMPLE 6 |
|---|---|---|
| Bath exit temperature (°C) | 628 | 628 |
| Line speed (metres/hour) | 160 | 160 |
| WOCl₄ line temperature (°C) | 210 | 210 |
| Ethyl acetate line temperature (°C) | 160 | 160 |
| Coater Head Temperature (°C) | 210 | 210 |
| WOCl₄ vapourizer temperature (°C) | 175 | 175 |
| Ethyl acetate bubbler temperature (°C) | 42 | 42 |
| Nitrogen flow (WOCl₄ bubbler) (litres/min) | 1 | 1 |
| Nitrogen flow (ethyl acetate bubbler) (litres/min) | 1.2 | 1.2 |
| Nitrogen flow (WOCl₄ make-up) (litres/min) | 4 | 4 |
| Nitrogen flow (ethyl acetate make-up) (litres/min) | 3 | 3 |
| Oxygen gas flow (litres/min) | 0.2 | 0.05 |
| Hexafluoroethane gas flow (litres/min) | - | 0.2 |
| Thickness of silicon oxide layer (nm) | 30 | 30 |
| Thickness of tungsten oxide layer (nm) | 150 | 170 |
| Growth rate of tungsten oxide layer (nm/second) | 21 | 24 |
| Thickness of fluorine doped tin oxide layer (nm) | 180 | 180 |

## Claims

1. A process for depositing a coating comprising tungsten oxide on the surface of a glass substrate by directing a gaseous stream comprising tungsten oxyhalide or tungsten chloride and a source of oxygen on to the surface of the glass substrate.

2. A process according to claim 1 wherein the coating comprising tungsten oxide comprises a layer of tungsten oxide.

3. A process according to claim 1 or claim 2 wherein tungsten oxyhalide comprises a tungsten oxychloride, preferably tungsten oxytetrachloride.

4. A process according to any preceding claim wherein tungsten oxyhalide or tungsten chloride comprises a substituted tungsten oxyhalide or tungsten chloride.

5. A process according to any preceding claim wherein the source of oxygen comprises an ester.

6. A process according to claim 5 wherein the ester has from 3 to 6 carbon atoms.

7. A process according to claim 5 or 6 wherein the ester is ethyl acetate or butyl acetate.

8. A process according to any preceding claim wherein the gaseous stream contains oxygen gas.

9. A process according to any preceding claim wherein the ratio of tungsten oxyhalide or tungsten chloride and the source of oxygen are such that the layer of tungsten oxide is deposited as non-stoichiometric tungsten oxide.

10. A process according to any preceding claim wherein the gaseous stream contains a source of fluorine.

11. A process according to claim 10 wherein the source of fluorine comprises hexafluoroethane, trifluoroacetic acid or hexafluoropropylene oxide.

12. A process according to any preceding claim wherein tungsten oxyhalide or tungsten chloride is entrained in the gaseous stream by flowing inert gas over hot tungsten oxyhalide or tungsten chloride.

13. A process according to claim 12 wherein tungsten oxyhalide or tungsten chloride is at a temperature in the range 170°C to 210°C.

14. A process according to claim 12 or 13 wherein the inert gas comprises nitrogen.

15. A process according to any preceding claim wherein the source of oxygen comprises an ester and is entrained in the gaseous stream by contacting said ester with a flowing inert gas.

16. A process according to claim 15 wherein the ester is at a temperature in the range 30°C to 45°C.

17. A process according to any preceding claim wherein the tungsten oxide layer has a thickness in the range 70 to 180 nm.

18. A process according to any preceding claim wherein the tungsten oxide layer is deposited at a growth rate in the range 3 to 25 nm s⁻¹.

19. A process according to any preceding claim wherein the tungsten oxide layer is overcoated with a further layer.

20. A process for coating glass comprising directing a gaseous stream containing a tungsten compound and a source of oxygen on to the surface of a glass substrate thereby forming a tungsten oxide layer **characterised in that** the tungsten oxide layer is non-stoichiometric and the tungsten oxide layer is overcoated with a further layer.

21. A process according to claim 19 or 20 wherein the further layer comprises a metal oxide.

22. A process according to claims 19 to 21 wherein the further layer comprises fluorine doped tin oxide.

23. A process according to any preceding claim wherein the process is performed during the float glass production process.

24. A process according to any preceding claim wherein the glass substrate is at a temperature in the range 500°C to 720°C.

25. A process according to any preceding claim wherein the glass substrate is at a temperature in the range 565°C to 655°C.

26. A process according to any preceding claim wherein the tungsten oxide layer is deposited on to coated glass.

27. A process according to claim 26 wherein the coated glass has a coating comprising silicon oxide, preferably containing carbon.

28. A process for coating glass comprising entraining a tungsten compound in a gas by flowing the gas over a tungsten compound at a temperature below its melting point and directing the gaseous stream on to a glass surface thereby forming a tungsten oxide layer.

29. A process for depositing a coating comprising tungsten oxide on the surface of a glass substrate by directing a gaseous stream comprising tungsten oxyhalide or tungsten chloride and an ester on to the surface of the glass substrate.

## Revendications

1. Procédé pour déposer un revêtement comprenant de l'oxyde de tungstène sur la surface d'un substrat en verre en dirigeant un courant gazeux comprenant un oxyhalogénure de tungstène ou du chlorure de tungstène et une source d'oxygène sur la surface du substrat en verre.

2. Procédé suivant la revendication 1, dans lequel le revêtement comprenant de l'oxyde de tungstène comprend une couche d'oxyde de tungstène.

3. Procédé suivant la revendication 1 ou la revendication 2, dans lequel l'oxyhalogénure de tungstène comprend un oxychlorure de tungstène, de préférence l'oxytétrachlorure de tungstène.

4. Procédé suivant l'une quelconque des revendications précédentes, dans lequel l'oxyhalogénure de tungstène ou chlorure de tungstène comprend un oxyhalogénure de tungstène ou chlorure de tungstène substitué.

5. Procédé suivant l'une quelconque des revendications précédentes, dans lequel la source d'oxygène comprend un ester.

6. Procédé suivant la revendication 5, dans lequel l'ester a 3 à 6 atomes de carbone.

7. Procédé suivant la revendication 5 ou 6, dans lequel l'ester est l'acétate d'éthyle ou l'acétate de butyle.

8. Procédé suivant l'une quelconque des revendications précédentes, dans lequel le courant gazeux contient de l'oxygène gazeux.

9. Procédé suivant l'une quelconque des revendications précédentes, dans lequel le rapport de l'oxyhalogénure de tungstène ou chlorure de tungstène et de la source d'oxygène est tel que la couche d'oxyde de tungstène soit déposée sous forme d'oxyde de tungstène non stoechiométrique.

10. Procédé suivant l'une quelconque des revendications précédentes, dans lequel le courant gazeux contient une source de fluor.

11. Procédé suivant la revendication 10, dans lequel la source de fluor comprend l'hexafluoréthane, l'acide trifluoroacétique ou l'oxyde d'hexafluoropropylène.

12. Procédé suivant l'une quelconque des revendications précédentes, dans lequel l'oxyhalogénure de tungstène ou chlorure de tungstène est entraîné dans le courant gazeux par écoulement des gaz inertes sur de l'oxyhalogénure de tungstène ou chlorure de tungstène chaud.

13. Procédé suivant la revendication 12, dans lequel iloxyhalogénure de tungstène ou chlorure de tungstène est à une température comprise dans l'intervalle de 170°C à 210°C.

14. Procédé suivant la revendication 12 ou 13, dans lequel le gaz inerte comprend l'azote.

15. Procédé suivant l'une quelconque des revendications précédentes, dans lequel la source d'oxygène comprend un ester et est entraînée dans le courant gazeux en mettant en contact ledit ester avec un courant d'un gaz inerte.

16. Procédé suivant la revendication 15, dans lequel l'ester est à une température comprise dans l'intervalle de 30°C à 45°C.

17. Procédé suivant l'une quelconque des revendications précédentes, dans lequel la couche d'oxyde de tungstène a une épaisseur comprise dans l'intervalle de 70 à 180 nm.

18. Procédé suivant l'une quelconque des revendications précédentes, dans lequel la couche d'oxyde de tungstène est déposée à une vitesse de croissance comprise dans l'intervalle de 3 à 25 nm s⁻¹.

19. Procédé suivant l'une quelconque des revendications précédentes, dans lequel la couche d'oxyde de tungstène est recouverte d'une couche supplémentaire.

20. Procédé de revêtement du verre, comprenant la direction d'un courant gazeux contenant un composé de tungstène et une source d'oxygène sur la surface d'un substrat en verre en formant ainsi une couche d'oxyde de tungstène, **caractérisé en ce que** la couche d'oxyde de tungstène est non stoechiométrique et la couche d'oxyde de tungstène est recouverte d'une couche supplémentaire.

21. Procédé suivant la revendication 19 ou 20, dans lequel la couche supplémentaire comprend un oxyde métallique.

22. Procédé suivant les revendications 19 à 21, dans lequel la couche supplémentaire comprend de l'oxyde d'étain dopé au fluor.

23. Procédé suivant l'une quelconque des revendications précédentes, qui est mis en oeuvre au cours du procédé de production de verre flotté.

24. Procédé suivant l'une quelconque des revendications précédentes, dans lequel le substrat en verre est à une température comprise dans l'intervalle de 500°C à 720°C.

25. Procédé suivant l'une quelconque des revendications précédentes, dans lequel le substrat en verre est à une température comprise dans l'intervalle de 565°C à 655°C.

26. Procédé suivant l'une quelconque des revendications précédentes, dans lequel la couche d'oxyde de tungstène est déposée sur le verre revêtu.

27. Procédé suivant la revendication 26, dans lequel le verre revêtu porte un revêtement comprenant de l'oxyde de silicium, contenant de préférence du carbone.

28. Procédé de revêtement du verre, comprenant l'entraînement d'un composé de tungstène dans un gaz par écoulement du gaz sur un composé de tungstène à une température inférieure à son point de fusion et la direction du courant gazeux sur une surface du verre pour former ainsi une couche dioxyde de tungstène.

29. Procédé pour déposer un revêtement comprenant de l'oxyde de tungstène sur la surface d'un substrat en verre en dirigeant un courant gazeux comprenant un oxyhalogénure de tungstène ou chlorure de tungstène et un ester sur la surface du substrat en verre.

## Patentansprüche

1. Verfahren zum Aufbringen einer Wolframoxid umfassenden Beschichtung auf die Oberfläche eines Glassubstrats, indem ein Gasstrom, der Wolframhalogenidoxid oder Wolframchlorid und eine Sauerstoffquelle umfaßt, auf die Oberfläche des Glassubstrats gerichtet wird.

2. Verfahren nach Anspruch 1, wobei die Wolframoxid umfassende Beschichtung eine Schicht aus Wolframoxid umfaßt.

3. Verfahren nach Anspruch 1 oder 2, wobei das Wolframhalogenidoxid ein Wolframchloridoxid und vorzugsweise Wolframtetrachloridoxid umfaßt.

4. Verfahren nach einem der vorhergehenden Ansprüche, wobei das Wolframhalogenidoxid oder Wolframchlorid ein substituiertes Wolframhalogenidoxid oder Wolframchlorid umfaßt.

5. Verfahren nach einem der vorhergehenden Ansprüche, wobei die Sauerstoffquelle einen Ester umfaßt.

6. Verfahren nach Anspruch 5, wobei der Ester 3 bis 6 Kohlenstoffatome besitzt.

7. Verfahren nach Anspruch 5 oder 6, wobei der Ester Ethylacetat oder Butylacetat ist.

8. Verfahren nach einem der vorhergehenden Ansprüche, wobei der Gasstrom gasförmigen Sauerstoff enthält.

9. Verfahren nach einem der vorhergehenden Ansprüche, wobei das Verhältnis von Wolframhalogenidoxid oder Wolframchlorid zur Sauerstoffquelle derart ist, daß die Wolframoxidschicht als nicht-stöchiometrisches Wolframoxid abgeschieden wird.

10. Verfahren nach einem der vorhergehenden Ansprüche, wobei der Gasstrom eine Fluorquelle enthält.

11. Verfahren nach Anspruch 10, wobei die Fluorquelle Hexafluorethan, Trifluoressigsäure oder Hexafluorpropylenoxid umfaßt.

12. Verfahren nach einem der vorhergehenden Ansprüche, wobei das Wolframhalogenidoxid oder Wolframchlorid vom Gasstrom mitgerissen wird, indem ein Inertgas über heißes Wolframhalogenidoxid oder Wolframchlorid strömt.

13. Verfahren nach Anspruch 12, wobei die Temperatur des Wolframhalogenidoxids oder Wolframchlorids im Bereich von 170 °C bis 210 °C liegt.

14. Verfahren nach Anspruch 12 oder 13, wobei das Inertgas Stickstoff umfaßt.

15. Verfahren nach einem der vorhergehenden Ansprüche, wobei die Sauerstoffquelle einen Ester umfaßt und vom Gasstrom mitgerissen wird, indem dieser Ester mit einem strömenden Inertgas in Berührung gebracht wird.

16. Verfahren nach Anspruch 15, wobei die Temperatur des Esters im Bereich von 30 bis 45 °C liegt.

17. Verfahren nach einem der vorhergehenden Ansprüche, wobei die Dicke der Wolframoxidschicht im Bereich von 70 bis 180 nm liegt.

18. Verfahren nach einem der vorhergehenden Ansprüche, wobei die Wolframoxidschicht mit einer Wachstumsgeschwindigkeit im Bereich von 3 bis 25 nm s⁻¹ abgeschieden wird.

19. Verfahren nach einem der vorhergehenden Ansprüche, wobei die Wolframoxidschicht mit einer weiteren Schicht überzogen wird.

20. Verfahren zur Glasbeschichtung, welches das Richten eines Gasstroms, der eine Wolframverbindung und eine Sauerstoffquelle enthält, auf die Oberfläche eines Glassubstrates, wodurch eine Wolframoxidschicht gebildet wird, umfaßt, **dadurch gekennzeichnet, daß** die Wolframoxidschicht nicht-stöchiometrisch ist und die Wolframoxidschicht mit einer weiteren Schicht überzogen wird.

21. Verfahren nach Anspruch 19 oder 20, wobei die weitere Schicht ein Metalloxid umfaßt.

22. Verfahren nach den Ansprüchen 19 bis 21, wobei die weitere Schicht mit Fluor dotiertes Zinnoxid umfaßt.

23. Verfahren nach einem der vorhergehenden Ansprüche, wobei das Verfahren während der Herstellung von Floatglas durchgeführt wird.

24. Verfahren nach einem der vorhergehenden Ansprüche, wobei die Temperatur des Glassubstrats im Bereich von 500 °C bis 720 °C liegt.

25. Verfahren nach einem der vorhergehenden Ansprüche, wobei die Temperatur des Glassubstrats im Bereich von 565 °C bis 655 °C liegt.

26. Verfahren nach einem der vorhergehenden Ansprüche, wobei die Wolframoxidschicht auf beschichtetes Glas aufgebracht wird.

27. Verfahren nach Anspruch 26, wobei das beschichtete Glas eine Beschichtung besitzt, die Siliciumoxid, das vorzugsweise Kohlenstoff enthält, umfaßt.

28. Verfahren zur Glasbeschichtung, welches das Mitreißen einer Wolframverbindung von einem Gas durch Strömen des Gases über eine Wolframverbindung bei einer Temperatur von unterhalb von deren Schmelzpunkt und Richten des Gasstroms auf eine Gasoberfläche umfaßt, wodurch eine Wolframoxidschicht gebildet wird.

29. Verfahren zum Aufbringen einer Wolframoxid umfassenden Beschichtung auf die Oberfläche eines Glassubstrats, indem ein Gasstrom, der Wolframhalogenidoxid oder Wolframchlorid und einen Ester umfaßt, auf die Oberfläche des Glassubstrats gerichtet wird.
